# EUROPEAN PATENT SPECIFICATION

(11) **EP 3 073 108 B1**
(45) Date of publication and mention of the grant of the patent: **02.10.2019**
(21) Application number: 15161247.0
(22) Date of filing: 27.03.2015
(51) Int. Cl.: F03D 7/02

(54) **CONTROL FOR A WIND TURBINE**
STEUERUNG FÜR EINE WINDTURBINE
CONTROLE D'UNE ÉOLIENNE

(43) Date of publication of application: 28.09.2016
(73) Proprietor: Siemens Gamesa Renewable Energy A/S, 7330 Brande (DK)
(72) Inventor: Medina, Paul F., Boulder, 80302 (US); Obrecht, John M., Louisville, 80027 (US)
(74) Representative: Aspacher, Karl-Georg

(56) References cited:
- JP-A- 2004 293 527
- US-A1- 2010 143 117

## Description

The present invention relates to a method of controlling a wind turbine. Furthermore, the invention relates to a wind turbine featuring such a control mechanism.

In recent years, the technical development of wind turbines has shown considerable progress. Current wind turbines have reached a high level of technical maturity. Consequently, the generation of electricity by wind turbines is becoming highly efficient. However, there is still potential for further improvement of the performance of a wind turbine.

A first example of a field where further performance improvement seems possible is the optimization and increase of the aerodynamic efficiency of the wind turbine. This particularly relates to the control and design of the rotor blades of the wind turbine.

Another example of a field in which potential performance increase seems probable is the optimization of the longevity and maintenance metric such that the loading of components of the wind turbine may be reduced or a potential failure of certain components can be anticipated more reliably.

Yet another example where a performance increase of the wind turbine can be reasonably expected is the field of noise reduction. This relates to the noise that is generated by a wind turbine under operational conditions. Noise that is generated by the interaction of the wind that is impinging on the rotor blades and the rotor blades as such may be indicative of a decrease of the performance of the wind turbine. Additionally, noise restriction requirements may apply to the wind turbine, depending on the site and the surroundings where the wind turbine is located, leading to lost potential for energy production.

The patent application US 2009/0169378 A1 discloses a pitch control system which is adapted to control the pitch angle of a rotor blade in case a stall condition of that rotor blade is detected on the basis of a sensor input. This has the aim of avoiding stall and thus increase the performance of the wind turbine.

The patent application US 2014/0356164 A1 also discloses a system for control of a pitch of a rotor blade. The system aims to prevent flow separation from developing into a full stall condition by using a focused sensor. As a result, an increase of the performance of the wind turbine is expected, too.

Furthermore, the patent applications US 2010/143117 A1 and JP 2004 293527 A relate to the control of noise generated by wind turbines.

The present invention relates to an advantageous control scheme including choosing the operational parameters of the wind turbine such that the performance of the wind turbine is optimized.

Thus, the objective of the present invention is to provide a method of controlling a wind turbine such that the performance of the wind turbine is optimized compared to conventional control schemes.

This objective is solved by the independent claims. The dependent claims describe advantageous developments and modifications of the invention.

According to the invention, there is provided a method of controlling a wind turbine. The wind turbine comprises a tower, a nacelle, a rotating hub, a first rotor blade and a second rotor blade. Both rotor blades are mounted to the hub. The method comprises the steps of
a) measuring noise by means of at least one noise detection device, wherein the noise is generated in at least one angular section within the rotor plane due to an interaction between the first rotor blade of the wind turbine and airflow impinging on the first rotor blade, and
b) changing the orientation of the second rotor blade with regard to the direction of the impinging airflow such that the noise which is generated by the interaction between the second rotor blade and the airflow impinging on the second rotor blade in the angular section is changed.

A wind turbine refers to a device that can convert wind energy, i.e. kinetic energy from wind, into mechanical energy. The mechanical energy is subsequently used to generate electricity. A wind turbine is also denoted a wind power plant.

The wind turbine comprises a first rotor blade and at least a second rotor blade. Advantageously, the wind turbine comprises also a third rotor blade. Typically, in the presence of a relative movement between the rotor blades and the ambient air, noise is generated due to the interaction between the rotor blades and an airflow impinging on the rotor blades. The level of noise, i.e. the intensity of the noise that is generated depends on the relative speed between the airflow and the rotor blades, the angle at which the airflow impinges on the rotor blades, geometric characteristics of the rotor blade, and other conditions.

In a first step of the present invention, the noise which is generated by the interaction between the rotor blades and the airflow impinging on the rotor blades is measured. The measurement is realized by means of at least one noise detection device. An example of such a noise detection device is a conventional microphone. Advantageously, the measured noise is analyzed with respect to its intensity and with respect to the direction where it comes from. In other words, the intensity of the noise and its angular distribution may be determined. The determination of the intensity of the noise and its angular distribution may be carried out by means of a controller. Note that the controller may be integrated in the noise detection device or may be separated.

Advantageously, a plurality of noise detection devices may be used. If a plurality of noise detection devices is used, it may be advantageous to have one central controller being in operational contact with the noise detection devices. The controller not only determines the characteristics of the measured noise but also chooses operational parameters of the wind turbine based on the measured noise. In other words, a control algorithm, i.e. a control scheme, is equipped in the controller in order to be capable to choose and determine preferred operational parameters of the wind turbine.

An advantage of the present method is that by relatively simple means and by a simple control mechanism the operational parameters of the wind turbine may be adapted such that the overall performance of the wind turbine is increased.

The method of controlling the wind turbine and optimizing its performance includes pitching of at least one of the rotor blades in a favorable manner. The adaptation of the orientation of a rotor blade with respect to the remaining wind turbine, in particular with respect to the hub of the wind turbine is commonly known. Pitching the rotor blades has been proven to be an efficient and relatively easy way to influence diverse features and parameters of the wind turbine, including loading of the rotor blade and other components of the wind turbine, influencing how much energy is absorbed by the rotor blade, etc. Thus, by choosing the pitch angle as the operational parameter that is controlled, a link between a measured noise generated at the rotor blade and a control of the rotor blade by pitching the rotor blade is established.

Conventional pitch control systems which are based on noise measurements, as described e.g. in the cited patent applications, always control that rotor blade, where the noise has been detected. In other words, a consequence of detecting noise exceeding a given threshold value at the first rotor blade, that first rotor blade is pitched according to a control algorithm.

The choice of operational parameters relates to individual pitching of the second rotor blade of the set of rotor blades that is comprised by the wind turbine. This individual pitching is based on the information that is obtained by the noise measurement; specifically it is based on the measured noise due to the interaction between the first rotor blade and the airflow impinging on the first rotor blade.

Thus, individual pitching may be carried out based on the information that is obtained and analyzed by the noise measurements. This concept can also be described as a feed-forward control mechanism. This is due to the fact that by measuring noise at one rotor blade, a consequence for the pitch angle of another rotor blade is drawn. This enables that the second rotor blade has an improved and optimized configuration due to the information about the measured noise that has been acquired beforehand.

Additionally or alternatively, the choice of operational parameters relates to yawing the nacelle of the wind turbine.

The nacelle can typically be yawed about a yaw axis that is substantially vertical in typical wind turbines. If by analysis of the measured noise the conclusion is drawn that performance of the wind turbine can be increased and optimized by yawing the complete nacelle into or out of the wind, then the controller is able to choose this option and realize favorable yawing positions of the nacelle.

In an embodiment of the invention, data related to the measured noise is transmitted from the noise detection device to the controller, and the angular distribution and intensity of the noise is calculated by the controller.

The transmission of the data may be realized by conventional electric cables or by optical fibers, or via wireless communication methods.

In another embodiment of the invention, the angular capture range of each noise detection device is chosen such that by summation of the angular capture ranges of a set of noise detection devices the complete rotor plane is monitored simultaneously.

The rotor plane relates to the plane which is perpendicular to the rotor axis of rotation. In other words, the rotor plane is the plane where the rotor blades are in. By simultaneously monitoring the complete rotor plane it is understood that the full angular range, i.e. 360 degrees, is continuously and simultaneously monitored. Obviously, depending on the distal capability of noise detection by means of the noise detection devices there are limitations of how far a generated noise can still be measured reliably by the noise detection devices. However, it is advantageous to monitor the complete area which is covered by the rotor blades during one full rotation of the rotor. The capture range which is understood as the acoustic capture range of the noise detection devices may be described as a cone with a certain angle. Thus, the capture range of the noise detection devices may, for example, be 30 degrees or 60 degrees or even 120 degrees.

In another embodiment of the invention, the angular distribution of the noise is determined by triangulation of two adjacent noise detection devices of the set of noise detection devices.

Triangulation is a common and well-known concept of locating a specific point or source which is away at a certain distance from the detection devices. Due to the presence of a plurality of noise detection devices, advantageously two adjacent noise detection devices are used for specifying and determining the angular distribution, i.e. the specific direction where the generated noise comes from.

The noise detection device may either be mounted on a component of the wind turbine which is stationary relative to the first rotor blade or it may be mounted on a component of the wind turbine which is movable relative to the first rotor blade. In other words, the noise detection device may either rotate in the same direction and with the same angular velocity as the first rotor blade such that the relative distance between the first rotor blade and the noise detection device remains unchanged during operation of the wind turbine, or the noise detection device may rotate relative to first rotor blade during operation of the wind turbine. In this context, the term "operation of the wind turbine" signifies a rotation of the rotor blades about the axis of rotation of the rotor of the wind turbine.

As an example, the noise detection device may be mounted on the nacelle or on the tower of the wind turbine. It may also be mounted on the ground, where the wind turbine is installed on.

Alternatively, the noise detection device may be mounted on one of the rotor blades, particularly at the root of the respective rotor blade, or on the hub, which is co-rotating with the rotor blades.

In the case of the provision of a set of noise detection devices, these noise detection devices may be installed on the same component of the wind turbine or they may be installed on different components, wherein the components relate to the components mentioned above.

In another embodiment of the invention, the optimization of the performance of the wind turbine includes increasing the electrical power generated by the wind turbine.

This increase of the electrical power that is generated by the wind turbine is also referred to as the AEP, which signifies the annual energy production of the wind turbine. Thus, the rather abstract notion of performance of the wind turbine may relate to the very concrete and quantitative aspect of the amount of electrical power that can be generated by the wind turbine annually.

In another embodiment of the invention, the performance of the wind turbine includes reduction of the noise that is emitted by the wind turbine.

This relates to the fact that another concrete aspect of how to characterize the performance of a wind turbine is the amount and intensity of the noise that is generated by the wind turbine. Typically, a low level of noise is desired. The controller may optimize both aspects including an increase of the electrical power and a reduction of the noise or it may only be directed to one of the two aspects.

Furthermore, the invention is directed towards a wind turbine which comprises a tower, a nacelle, a rotating hub, a first rotor blade and at least a second rotor blade. Both rotor blades are mounted to the hub. Additionally, the wind turbine comprises at least one noise detection device for measuring the noise which is generated in an angular section within the rotor plane due to an interaction between the rotor blades of the wind turbine and the airflow impinging on the first rotor blade. Furthermore, the wind turbine comprises means for changing the orientation of the second rotor blade with regard to the direction of the impinging airflow such that the noise which is generated by the interaction between the second rotor blade and the airflow impinging on the second rotor blade is changed.

Such a wind turbine is well suited to perform the inventive method as described above. It requires only a limited set of modifications compared to conventional wind turbines. Basically, only a set of noise detection devices have to be added to a conventional wind turbine. According to the invention, the wind turbine comprises a controller for analyzing the data that is received from the noise detection devices, analyzing the measured noise and choosing appropriate operational commands. This is easy to implement either on newly installed wind turbines or as a retrofit to already operating wind turbines.

Advantageously, the noise detection devices are microphones, for instance conventional microphones.

Finally, in an advantageous embodiment the wind turbine is controlled by one of the methods of controlling the wind turbine as described above.

Embodiments of the invention are now described, by way of example only, with reference to the accompanying drawings, of which:
- Figure 1: shows a wind turbine;
- Figure 2: shows a set of noise detection devices that are installed at a nacelle of a wind turbine;
- Figure 3: shows a controller that is connected to the set of noise detection devices;
- Figure 4: shows how the noise that is generated at a tip section of a rotor blade is detected by the noise detection device;
- Figure 5: shows a second rotor blade where due to a favorable pitching no significant noise is generated at the tip section; and
- Figure 6: shows a noise field that is obtained by applying the inventive method.

The illustrations in the drawings are in schematic form. It is noted that in different figures, similar or identical elements may be provided with the same reference signs.

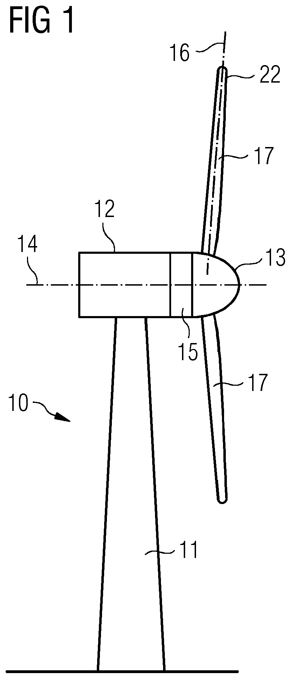

In Figure 1, a wind turbine 10 is shown. The wind turbine 10 comprises a nacelle 12 and a tower 11. The nacelle 12 is mounted at the top of the tower 11. The nacelle 12 is mounted rotatable with regard to the tower 11 by means of a yaw bearing. The axis of rotation of the nacelle 12 with regard to the tower 11 is referred to as the yaw axis.

The wind turbine 10 also comprises a hub 13 with three rotor blades 17 (of which two rotor blades 17 are depicted in Figure 1). The hub 13 is mounted rotatable with regard to the nacelle 12 by means of a main bearing. The hub 13 is mounted rotatable about a rotor axis of rotation 14.

The wind turbine 10 furthermore comprises a main shaft, which connects the hub 13 with a rotor of a generator 15. The hub 13 is connected directly to the rotor, thus the wind turbine 10 is referred to as a gearless, direct driven wind turbine. As an alternative, the hub 13 may also be connected to the rotor via a gearbox. This type of wind turbine is referred to as a geared wind turbine.

The generator 15 is accommodated within the nacelle 12. It comprises the rotor and a stator. The generator 15 is arranged and prepared for converting the rotational energy from the rotor into electrical energy.

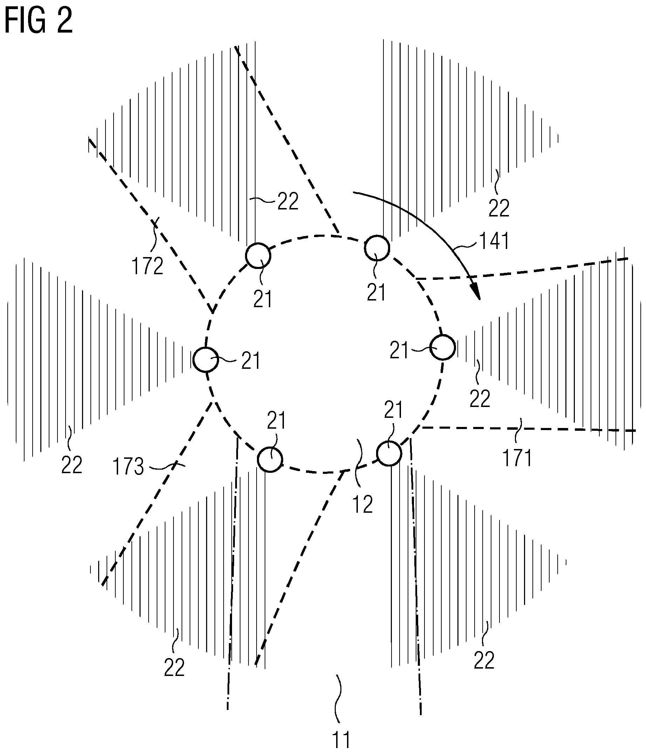

Figure 2 shows a schematic drawing of a wind turbine as viewed from the front and into the direction of the rotor axis of rotation. The nacelle 12 is illustrated as having a circular cross section and being positioned in the middle of Figure 2. In Figure 2, from the nacelle 12 downwards, the tower 11 is illustrated having two dash-dotted lines as limitations. Three rotor blades are attached to the hub (not shown explicitly) of the wind turbine, namely a first rotor blade 171, a second rotor blade 172 and a third rotor blade 173. Additionally, six noise detection devices 21 are connected to the nacelle 12. The noise detection devices 21 are evenly distributed along the circumferential line of the nacelle 12 in the cross sectional view. Each noise detection device 21 has a specific acoustic capture range 22. The acoustic capture range 22 denotes the range where a noise signal can be captured reliably.

Note that due to the fact that the noise detection devices 21 are mounted at the nacelle 12 that is stationary, the noise detection devices 21 can efficiently monitor the rotor blades 17 which are mounted on the rotating hub. The direction of rotation of the rotor is also illustrated 141 in Figure 2.

The rotor blades 17 are monitored by the set of noise detection devices 21. Depending on the capture range 22 of the noise detection devices 21 and depending on the number of noise detection devices 21, determination of the angular distribution of noise may be made by triangulation of two neighboring noise detection devices 21. Alternatively, it may also accurately be determined by one single noise detection device 21.

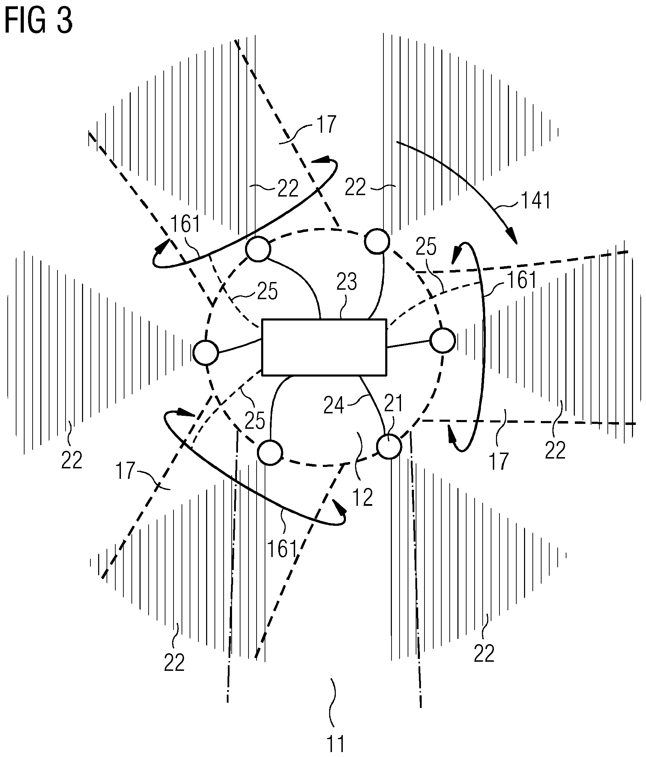

Figure 3 shows the same wind turbine as in Figure 2. More specifically, a controller 23 for choosing operational parameters based on the analysis of the measured noise is illustrated. The controller 23 is placed separately from the noise detection devices 21 and is connected to each of the noise detection devices 21 by noise detection connection means 24. These noise detection connection means 24 may be electric cables or optical fibers or wireless communications or other suitable means to connect the noise detection devices 21 that are installed at the nacelle of the wind turbine with the controller 23. Advantageously, the controller 23 is also installed at the nacelle of the wind turbine.

In the embodiment of Figure 3 the operational parameter that is chosen and set by the controller 23 is the variation of the pitch angle of the rotor blades 17. Concretely, the rotor blades may be pitched, jointly or individually, about a pitch axis which is substantially coinciding with the longitudinal axes of the rotor blades 17. The direction of rotation of pitch 161 is shown for each of the three rotor blades 17.

In this example, the noise measurements which are made by each noise detection device 21 are sent or transmitted to the central controller 23 which analyses the noise patterns and provides reactive measures if necessary. If for example, a local anomaly of noise is detected at a specific rotor blade 17, this information is fed forward to an individual rotor blades pitch system such that the lagging or trailing rotor blade, which is referred to as the rotor blade that follows the leading rotor blade, is countering the local anomaly with an already optimized and adapted pitch angle.

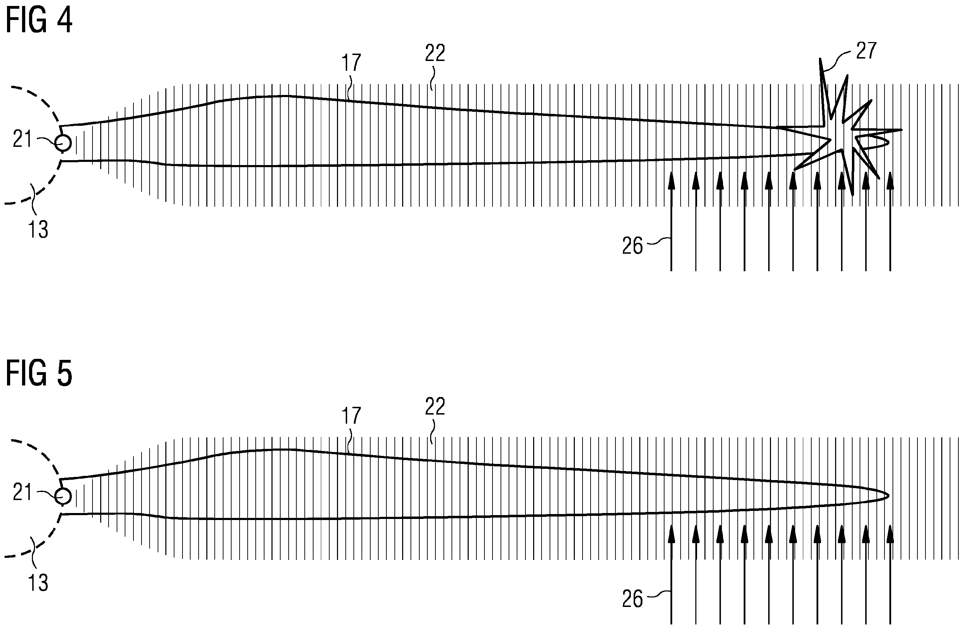

Figure 4 shows such a case wherein a rotor blade 17 which is connected to a hub 13 experiences a wind anomaly. This translates into an airflow 26 which impinges on the rotor blade 17 with a specific orientation and intensity. Particularly at the tip section of the rotor blade 17, this creates, i.e. generates noise 27. This noise with an unusual and uncommon noise pattern and/or noise intensity is measured and captured by the noise detection device 21. It is captured as soon as it enters the capture range 22 of the noise detection device 21. Assuming the fact that the wind anomaly persists for a few seconds, e.g. for one to five seconds or longer, the controller is able to send an appropriate signal to the rotor blade pitch system such that the trailing rotor blade 17 which is shown in Figure 5 is pitched about a certain pitch angle. This adapted pitch angle prevents or at least mitigates the generated noise. In the example of Figure 5 it completely eliminates the unusual level of noise that is generated at the tip section of the rotor blade 17. Thus, a feed-forward control mechanism is established based on noise measurements and controlled by a central controller.

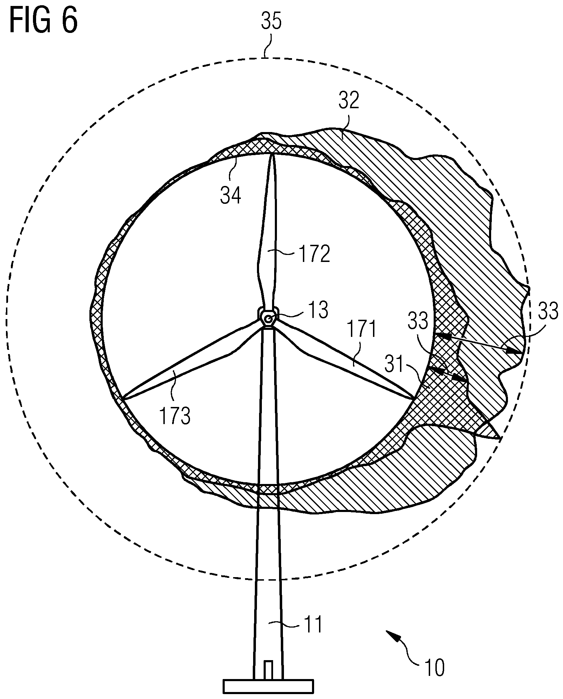

Figure 6 shows how a complete wind field can be generated and recorded if, for example, a set of noise detection devices is mounted to the nacelle of a wind turbine 10. The illustration in Figure 6 shows a first situation where a first noise distribution field 31 is detected. The height of the illustrated noise intensity or signal strength in Figure 6 describes the level of intensity of the noise which is referred to as the angular noise intensity 33. Thus, for each direction along the 360 degrees of the rotor plane a specific angular noise intensity 33 exists. The first noise distribution field 31 represents a local "hot spot" in which the noise detection devices detected anomalously high acoustic emission. In this case, an appropriate reaction of the controller would be the sending of this feedback to the trailing rotor blades pitch system such that the trailing rotor blade can be pitched to a larger angle of attack. Consequently, less noise will be produced compared to the situation that no previous adaptation of the trailing rotor blade would have been performed. The rotor blade that detects the local hot spot is represented by the first rotor blade 171. Trailing rotor blades are the second rotor blade 172 and the third rotor blade 173.

Figure 6 also shows a second scenario, wherein a second noise distribution field 32 is detected. In this case a noise pattern is shown which does not indicate a local anomaly of the wind but rather a misalignment of the yawing direction between the incoming wind flow and the turbine. This could be due to a high wind shear and veer event. An advantageous reaction of the controller in this case would be the yawing of the complete nacelle including the hub with the rotor blades which are attached to or connected to the nacelle such that an overall reduction of the generated noise or generated acoustic emission can be realized.

## Claims

1. Method of controlling a wind turbine (10), the wind turbine (10) comprising a tower (11), a nacelle (12), a rotating hub (13), a first rotor blade (171) and at least a second rotor blade (172), wherein both rotor blades (171, 172) are mounted to the hub (13), and
wherein the method comprises the steps of
- measuring noise (27) by means of at least one noise detection device (21), the noise (27) being generated in at least one angular section within the rotor plane due to an interaction between the first rotor blade (171) of the wind turbine (10) and airflow (26) impinging on the first rotor blade (171), and
- changing the orientation of the second rotor blade (172) with regard to the direction of the impinging airflow (26) such that the noise which is generated by the interaction between the second rotor blade (172) and the airflow (26) impinging on the second rotor blade (172) in the angular section is changed.

2. Method according to claim 1,
wherein the method comprises the further steps of
- determining the rotational speed of the rotor (18), and
- calculating the expected time needed by the second rotor blade (202) to reach the angular section within the rotor plane, wherein the calculation is carried out based on the determined rotational speed of the rotor (18) and the angle between the first rotor blade (201) and the second rotor blade (202).

3. Method according to one of the preceding claims,
wherein
- the wind turbine (10) comprises a set of noise detection devices (21) for measuring the noise (27), and
- by simultaneously measuring the noise by the set of noise detection devices (21) a more complete picture of the generated noise within the rotor plane is obtained.

4. Method according to claim 3,
wherein an angular distribution of the noise (27) is determined by triangulation of two adjacent noise detection devices of the set of noise detection devices (21).

5. Method according to one of the preceding claims,
wherein the noise detection device (21) is mounted movably relative to the first rotor blade (171).

6. Method according to claim 5,
wherein the noise detection device (21) is mounted on the nacelle (12) of the wind turbine (10), on the tower (11) of the wind turbine (10) or on the ground where the wind turbine (10) is installed on.

7. Method according to one of the claims 1 to 4,
wherein the noise detection device (21) is mounted stationary relative to the first rotor blade (171).

8. Method according to claim 7,
wherein the noise detection device (21) is mounted on the first rotor blade (171), the second rotor blade (172) or on the hub (13) of the wind turbine (10).

9. Method according to one of the preceding claims,
wherein the orientation of the second rotor blade (172) with regard to the direction of the impinging airflow (26) is changed by pitching the second rotor blade (172).

10. Method according to one of the preceding claims,
wherein the orientation of the second rotor blade (172) with regard to the direction of the impinging airflow (26) is changed by yawing the nacelle (12) of the wind turbine (10).

11. Method according to one of the preceding claims,
wherein if the noise which has been generated in the angular section within the rotor plane by the interaction between the first rotor blades (172) and the airflow (26) impinging on the first rotor blade (172) is greater than a predetermined noise threshold value, the orientation of the second rotor blade (172) with regard to the direction of the impinging airflow (26) is changed such that the noise which is generated in the angular section by the interaction between the second rotor blades (172) and the airflow (26) impinging on the second rotor blade (172) is reduced compared to the noise which has been generated in the angular section by the interaction between the first rotor blade (172) and the airflow (26) impinging on the first rotor blade (172).

12. Method according to one of the preceding claims,
wherein if the noise which has been generated in the angular section within the rotor plane by the interaction between the first rotor blades (172) and the airflow (26) impinging on the first rotor blade (172) is smaller than a predetermined noise threshold value, the orientation of the second rotor blade (172) with regard to the direction of the impinging airflow (26) is changed such that the noise which is generated in the angular section by the interaction between the second rotor blades (172) and the airflow (26) impinging on the second rotor blade (172) is increased compared to the noise which has been generated in the angular section by the interaction between the first rotor blade (172) and the airflow (26) impinging on the first rotor blade (172).

13. Method according to one of the preceding claims,
wherein the measured noise is calculated into wind speeds such that a wind field for the swept area of the rotor blades (171, 172) can be obtained.

14. Wind turbine (10),
wherein the wind turbine (10) comprises
- a tower (11), a nacelle (12), a rotating hub (13), a first rotor blade (171) and at least a second rotor blade (172), wherein both rotor blades (171, 172) are mounted to the hub (13),
- at least one noise detection device (21) for measuring the noise (27) which is generated in an angular section within the rotor plane due to an interaction between the first rotor blade (171) of the wind turbine (10) and the airflow (26) impinging on the first rotor blade (171),
- means for changing the orientation of the second rotor blade (172) with regard to the direction of the impinging airflow (26) such that the noise which is generated by the interaction between the second rotor blade (172) and the airflow (26) impinging on the second rotor blade (172) is changed, and **characterized in that** the wind turbine further comprises
- a controller (23) for analyzing the data that is received from the noise detection device (21), analyzing the measured noise and choosing appropriate operational commands, wherein the choice of operational parameters relates to individual pitching of the second rotor blade (172).

15. Wind turbine (10) according to claim 14,
wherein the noise detection device (21) is a microphone.

## Patentansprüche

1. Verfahren zum Steuern einer Windenergieanlage (10), die einen Turm (11), eine Gondel (12), eine rotierende Nabe (13), ein erstes Rotorblatt (171) und zumindest ein zweites Rotorblatt (172) umfasst, wobei beide Rotorblätter (171, 172) an der Nabe (13) angebracht sind, und
wobei das Verfahren folgende Schritte umfasst:
- Messen eines Geräuschs (27) mithilfe mindestens einer Geräuscherfassungsvorrichtung (21), wobei das Geräusch (27) aufgrund einer Wechselwirkung zwischen dem ersten Rotorblatt (171) der Windenergieanlage (10) und einem auf das erste Rotorblatt (171) auftreffenden Luftstrom (26) in mindestens einem Winkelbereich innerhalb der Rotorebene entsteht, und
- Ändern der Ausrichtung des zweiten Rotorblatts (172) in Bezug auf die Richtung des auftreffenden Luftstroms (26), so dass sich das Geräusch, das durch die Wechselwirkung zwischen dem zweiten Rotorblatt (172) und dem auf das zweite Rotorblatt (172) auftreffenden Luftstrom (26) in dem Winkelbereich entsteht, ändert.

2. Verfahren nach Anspruch 1,
wobei das Verfahren die folgenden weiteren Schritte umfasst:
- Bestimmen der Drehzahl des Rotors (18) und
- Berechnen der Zeit, die das zweite Rotorblatt (202) erwartungsgemäß benötigt, bis es den Winkelbereich innerhalb der Rotorebene erreicht, wobei die Berechnung auf der Grundlage der bestimmten Drehzahl des Rotors (18) und des Winkels zwischen dem ersten Rotorblatt (201) und dem zweiten Rotorblatt (202) erfolgt.

3. Verfahren nach einem der vorhergehenden Ansprüche,
wobei
- die Windenergieanlage (10) einen Satz Geräuscherfassungsvorrichtungen (21) zum Messen des Geräuschs (27) umfasst und
- durch gleichzeitiges Messen des Geräuschs durch den Satz Geräuscherfassungsvorrichtungen (21) ein realistischerer Eindruck von dem innerhalb der Rotorebene entstehenden Geräusch gewonnen wird.

4. Verfahren nach Anspruch 3,
wobei eine Winkelverteilung des Geräuschs (27) durch Triangulation von zwei benachbarten Geräuscherfassungsvorrichtungen aus dem Satz Geräuscherfassungsvorrichtungen (21) bestimmt wird.

5. Verfahren nach einem der vorhergehenden Ansprüche,
wobei die Geräuscherfassungsvorrichtung (21) in Bezug auf das erste Rotorblatt (171) beweglich angebracht ist.

6. Verfahren nach Anspruch 5,
wobei die Geräuscherfassungsvorrichtung (21) an der Gondel (12) der Windenergieanlage (10), am Turm (11) der Windenergieanlage (10) oder am Boden angebracht ist, wo die Windenergieanlage (10) installiert ist.

7. Verfahren nach einem der Ansprüche 1 bis 4,
wobei die Geräuscherfassungsvorrichtung (21) in Bezug auf das erste Rotorblatt (171) ortsfest angebracht ist.

8. Verfahren nach Anspruch 7,
wobei die Geräuscherfassungsvorrichtung (21) an dem ersten Rotorblatt (171), dem zweiten Rotorblatt (172) oder der Nabe (13) der Windenergieanlage (10) angebracht ist.

9. Verfahren nach einem der vorhergehenden Ansprüche,
wobei die Ausrichtung des zweiten Rotorblatts (172) in Bezug auf die Richtung des auftreffenden Luftstroms (26) durch Neigen des zweiten Rotorblatts (172) geändert wird.

10. Verfahren nach einem der vorhergehenden Ansprüche,
wobei die Ausrichtung des zweiten Rotorblatts (172) in Bezug auf die Richtung des auftreffenden Luftstroms (26) durch Gieren der Gondel (12) der Windenergieanlage (10) geändert wird.

11. Verfahren nach einem der vorhergehenden Ansprüche,
wobei, wenn das Geräusch, das durch die Wechselwirkung zwischen dem ersten Rotorblatt (172) und dem auf das erste Rotorblatt (172) auftreffenden Luftstrom (26) in dem Winkelbereich innerhalb der Rotorebene entstanden ist, einen vorgegebenen Geräuschschwellwert übersteigt, die Ausrichtung des zweiten Rotorblatts (172) in Bezug auf die Richtung des auftreffenden Luftstroms (26) so geändert wird, dass sich das Geräusch, das durch die Wechselwirkung zwischen dem zweiten Rotorblatt (172) und dem auf das zweite Rotorblatt (172) auftreffenden Luftstrom (26) in dem Winkelbereich entsteht, im Vergleich zu dem Geräusch, das durch die Wechselwirkung zwischen dem ersten Rotorblatt (172) und dem auf das erste Rotorblatt (172) auftreffenden Luftstrom (26) in dem Winkelbereich entstanden ist, reduziert.

12. Verfahren nach einem der vorhergehenden Ansprüche, wobei, wenn das Geräusch, das durch die Wechselwirkung zwischen dem ersten Rotorblatt (172) und dem auf das erste Rotorblatt (172) auftreffenden Luftstrom (26) in dem Winkelbereich innerhalb der Rotorebene entstanden ist, unter einem vorgegebenen Geräuschschwellwert liegt, die Ausrichtung des zweiten Rotorblatts (172) in Bezug auf die Richtung des auftreffenden Luftstroms (26) so geändert wird, dass sich das Geräusch, das durch die Wechselwirkung zwischen dem zweiten Rotorblatt (172) und dem auf das zweite Rotorblatt (172) auftreffenden Luftstrom (26) in dem Winkelbereich entsteht, im Vergleich zu dem Geräusch, das durch die Wechselwirkung zwischen dem ersten Rotorblatt (172) und dem auf das erste Rotorblatt (172) auftreffenden Luftstrom (26) in dem Winkelbereich entstanden ist, verstärkt.

13. Verfahren nach einem der vorhergehenden Ansprüche,
wobei das gemessene Geräusch in Windgeschwindigkeiten umgerechnet wird, so dass ein Windfeld für die von den Rotorblättern (171, 172) überstrichene Fläche gewonnen werden kann.

14. Windenergieanlage (10),
wobei die Windenergieanlage (10) Folgendes umfasst:
- einen Turm (11), eine Gondel (12), eine rotierende Nabe (13), ein erstes Rotorblatt (171) und zumindest ein zweites Rotorblatt (172), wobei beide Rotorblätter (171, 172) an der Nabe (13) angebracht sind,
- mindestens eine Geräuscherfassungsvorrichtung (21) zum Messen des Geräuschs (27), das aufgrund einer Wechselwirkung zwischen dem ersten Rotorblatt (171) der Windenergieanlage (10) und dem auf das erste Rotorblatt (171) auftreffenden Luftstrom (26) in einem Winkelbereich innerhalb der Rotorebene entsteht,
- Mittel zum Ändern der Ausrichtung des zweiten Rotorblatts (172) in Bezug auf die Richtung des auftreffenden Luftstroms (26), so dass sich das Geräusch, das durch die Wechselwirkung zwischen dem zweiten Rotorblatt (172) und dem auf das zweite Rotorblatt (172) auftreffenden Luftstrom (26) entsteht,
ändert,
und **dadurch gekennzeichnet, dass** die Windenergieanlage ferner Folgendes umfasst:
- eine Steuerung (23) zum Analysieren der Daten, die aus der Geräuscherfassungsvorrichtung (21) empfangen wurden, Analysieren des gemessenen Geräuschs und Auswählen geeigneter Betriebsbefehle, wobei die Auswahl von Betriebsparametern vom individuellen Einstellwinkel des zweiten Rotorblatts (172) abhängig ist.

15. Windenergieanlage (10) nach Anspruch 14,
wobei es sich bei der Geräuscherfassungsvorrichtung (21) um ein Mikrofon handelt.

## Revendications

1. Procédé de contrôle d'une éolienne (10), l'éolienne (10) comprenant une tour (11), une nacelle (12), un moyeu rotatif (13), une première pale de rotor (171) et au moins une seconde pale de rotor (172), dans lequel les deux pales de rotor (171, 172) sont montées sur le moyeu (13), et
dans lequel le procédé comprend les étapes de
- mesure du bruit (27) au moyen d'au moins un dispositif de détection de bruit (21), le bruit (27) étant généré dans au moins une section angulaire à l'intérieur du plan de rotor en raison d'une interaction entre la première pale de rotor (171) de l'éolienne (10) et un flux d'air (26) incident sur la première pale de rotor (171), et
- modification de l'orientation de la seconde pale de rotor (172) par rapport à la direction du flux d'air incident (26) de sorte que le bruit qui est généré par l'interaction entre la seconde pale de rotor (172) et le flux d'air (26) incident sur la seconde pale de rotor (172) dans la section angulaire est modifié.

2. Procédé selon la revendication 1,
dans lequel le procédé comprend en outre les étapes de
- détermination de la vitesse de rotation du rotor (18), et
- calcul du temps prévu requis par la seconde pale de rotor (202) pour atteindre la section angulaire à l'intérieur du plan de rotor, dans lequel le calcul est réalisé sur la base de la vitesse de rotation déterminée du rotor (18) et de l'angle entre la première pale de rotor (201) et la seconde pale de rotor (202).

3. Procédé selon l'une des revendications précédentes, dans lequel
- l'éolienne (10) comprend un ensemble de dispositifs de détection de bruit (21) pour mesurer le bruit (27), et
- par la mesure simultanée du bruit par l'ensemble de dispositifs de détection de bruit (21), une image plus complète du bruit généré à l'intérieur du plan de rotor est obtenue.

4. Procédé selon la revendication 3,
dans lequel une distribution angulaire du bruit (27) est déterminée par la triangulation de deux dispositifs de détection de bruit adjacents de l'ensemble de dispositifs de détection de bruit (21).

5. Procédé selon l'une des revendications précédentes, dans lequel le dispositif de détection de bruit (21) est monté de manière mobile par rapport à la première pale de rotor (171).

6. Procédé selon la revendication 5,
dans lequel le dispositif de détection de bruit (21) est monté sur la nacelle (12) de l'éolienne (10), sur la tour (11) de l'éolienne (10) ou au sol où l'éolienne (10) est installée.

7. Procédé selon l'une des revendications 1 à 4,
dans lequel le dispositif de détection de bruit (21) est monté de manière stationnaire par rapport à la première pale de rotor (171).

8. Procédé selon la revendication 7,
dans lequel le dispositif de détection de bruit (21) est monté sur la première pale de rotor (171), sur la seconde pale de rotor (172) ou sur le moyeu (13) de l'éolienne (10).

9. Procédé selon l'une des revendications précédentes,
dans lequel l'orientation de la seconde pale de rotor (172) par rapport à la direction du flux d'air incident (26) est modifiée par un mouvement de tangage de la seconde pale de rotor (172).

10. Procédé selon l'une des revendications précédentes,
dans lequel l'orientation de la seconde pale de rotor (172) par rapport à la direction du flux d'air incident (26) est modifiée par un mouvement de lacet de la nacelle (12) de l'éolienne (10).

11. Procédé selon l'une des revendications précédentes,
dans lequel si le bruit qui a été généré dans la section angulaire à l'intérieur du plan de rotor par l'interaction entre les premières pales de rotor (172) et le flux d'air (26) incident sur la première pale de rotor (172) est supérieur à une valeur seuil de bruit prédéterminée, l'orientation de la seconde pale de rotor (172) par rapport à la direction du flux d'air incident (26) est modifiée de sorte que le bruit qui est généré dans la section angulaire par l'interaction entre les secondes pales de rotor (172) et le flux d'air (26) incident sur la seconde pale de rotor (172) est réduit comparativement au bruit qui a été généré dans la section angulaire par l'interaction entre la première pale de rotor (172) et le flux d'air (26) incident sur la première pale de rotor (172).

12. Procédé selon l'une des revendications précédentes,
dans lequel si le bruit qui a été généré dans la section angulaire à l'intérieur du plan de rotor par l'interaction entre les premières pales de rotor (172) et le flux d'air (26) incident sur la première pale de rotor (172) est inférieur à une valeur seuil de bruit prédéterminée, l'orientation de la seconde pale de rotor (172) par rapport à la direction du flux d'air incident (26) est modifiée de sorte que le bruit qui est généré dans la section angulaire par l'interaction entre les secondes pales de rotor (172) et le flux d'air (26) incident sur la seconde pale de rotor (172) est augmenté comparativement au bruit qui a été généré dans la section angulaire par l'interaction entre la première pale de rotor (172) et le flux d'air (26) incident sur la première pale de rotor (172).

13. Procédé selon l'une des revendications précédentes,
dans lequel le bruit mesuré est calculé en termes de vitesses du vent de sorte qu'un champ de vent pour la zone balayée des pales de rotor (171, 172) peut être obtenu.

14. Éolienne (10),
dans laquelle l'éolienne (10) comprend
- une tour (11), une nacelle (12), un moyeu rotatif (13), une première pale de rotor (171) et au moins une seconde pale de rotor (172), dans laquelle les deux pales de rotor (171, 172) sont montées sur le moyeu (13),
- au moins un dispositif de détection de bruit (21) pour mesurer le bruit (27) qui est généré dans une section angulaire à l'intérieur du plan de rotor en raison d'une interaction entre la première pale de rotor (171) de l'éolienne (10) et le flux d'air (26) incident sur la première pale de rotor (171),
- des moyens pour modifier l'orientation de la seconde pale de rotor (172) par rapport à la direction du flux d'air incident (26) de sorte que le bruit qui est généré par l'interaction entre la seconde pale de rotor (172) et le flux d'air (26) incident sur la seconde pale de rotor (172) est modifié, et **caractérisée en ce que** l'éolienne comprend en outre
- un contrôleur (23) pour analyser les données qui sont reçues à partir du dispositif de détection de bruit (21), analyser le bruit mesuré et choisir des instructions opérationnelles appropriées, dans laquelle le choix de paramètres opérationnels se rapporte au tangage individuel de la seconde pale de rotor (172).

15. Éolienne (10) selon la revendication 14,
dans laquelle le dispositif de détection de bruit (21) est un microphone.
